(19) Europäisches Patentamt

European Patent Office

Office européen des brevets

(11) Veröffentlichungsnummer: **0 248 148**
**B1**

(12) # EUROPÄISCHE PATENTSCHRIFT

(45) Veröffentlichungstag der Patentschrift:
23.05.90

(51) Int. Cl.⁵: **H01B 3/44,** H01B 3/28,
C08L 23/08, C08F 210/02

(21) Anmeldenummer: 87103024.3

(22) Anmeldetag: 04.03.87

(54) **Kabelisolierung auf Basis von Ethylenpolymerisaten.**

(30) Priorität: 08.03.86 DE 3607756

(43) Veröffentlichungstag der Anmeldung:
09.12.87 Patentblatt 87/50

(45) Bekanntmachung des Hinweises auf die Patenterteilung:
23.05.90 Patentblatt 90/21

(84) Benannte Vertragsstaaten:
AT BE CH DE FR GB LI NL SE

(56) Entgegenhaltungen:
EP-A- 0 157 106
WO-A-85/05216
DE-A- 2 914 014

(73) Patentinhaber: BASF Aktiengesellschaft,
Carl-Bosch-Strasse 38, D-6700 Ludwigshafen(DE)

(72) Erfinder: Schlag, Johannes, Dr., Leuschnerstrasse 36,
D-6700 Ludwigshafen(DE)
Erfinder: Koehnlein, Ernst, Dr., Ungsteiner Strasse 4,
D-6700 Ludwigshafen(DE)
Erfinder: Bauer, Peter, Erich-Kaestner-Strasse 13,
D-6700 Ludwigshafen(DE)
Erfinder: Koessler, Ludwig, Schlachthofstrasse 24 A,
D-6718 Gruenstadt(DE)

## Beschreibung

Die Erfindung betrifft eine Kabelisolierung mit hoher Widerstandsfähigkeit gegenüber dem Entstehen oder dem Wachstum von Wasserbäumchen (water trees) und mit hoher Alterungsbeständigkeit, bestehend aus LD-Polyethylen (I) und 0,5 bis 20 Gewichtsprozent, bezogen auf (I), eines von (I) unterschiedlichen Ethylenpolymerisats (II) und üblichen Zusatzstoffen in üblichen Mengen.

Bei derartigen Isolierungen für elektrische Kabel und Leitungen aus Ethylenpolymerisaten können sich bei gleichzeitiger Einwirkung von hohen elektrischen Feldstärken und Feuchtigkeit die sogenannten Wasserbäumchen (Watertrees) ausbilden, die als Schwächung der Isolierung angesehen werden und deshalb durch geeignete Zusätze vermieden werden müssen.

Es gibt zahlreiche Vorschläge zur Vermeidung bzw. Verminderung der Gefahr von Wasserbäumchen, welche die Zusammensetzung bzw. die Zugabe von Verzögerer gegen die Bildung von Wasserbäumchen betreffen.

So ist es aus der DE-A-29 48 492 bekannt, das für Kabelisolierungen vorgesehene Polyolefinmaterial nach der Granulierung und unmittelbar vor der Extrusion mit Wasser zu waschen, um die die Wasserbäumchen verursachenden geringen Mengen wasserlöslicher und hygroskopischer Salze zu entfernen (vgl. auch DE-A-29 11 756). Nachteilig bei diesem bekannten Verfahren ist der verhältnismäßig große Verfahrensaufwand, denn die Granulate müssen nach dem Waschvorgang mit Heißluft getrocknet werden.

Es ist auch bereits beschrieben, dem Polyolefinkabelmaterial vor seiner Herstellung sog. Wasserbäumchen-Inhibitoren zuzusetzen, die sich von polymeren Materialien ableiten. So werden für diesen Zweck in der Literatur empfohlen: Organopolysiloxane (vgl. US-A-4 492 647, 4 536 530 und EP-A-109 797), Polyethylenglykole (vgl. EP-A-57 604), Epoxidharze (vgl. Chem. Abstr. 96:182235), Ethylen-1-Buten- oder -1-Hexen-Copolymere (vgl. Chem. Abstr. 101:193825), Polypropylen (vgl. Chem. Abstr. 102:8329), Poly-1-buten (vgl. Chem. Abstr. 98:5097), Ethylen-Vinylacetat-Copolymerisat (vgl. Chem. Abstr. 93:169329), Polystyrol und Triallylisocyanurat (vgl. DD-A-160 808) mit Styrol gepfropftes Ethylen-Vinylacetat- oder Ethylen-Alkylacrylat-Copolymerisat (vgl. Chem. Abstr. 103:7802), Polyvinylalkohol (vgl. Chem. Abstr. 95:204983), chlorsulfoniertes Polyethylen (vgl. Chem. Abstr. 95:204981), Polyamid (vgl. Chem. Abstr. 96:21007) Ethylen-Ethylacrylat-Copolymerisat (vgl. Chem. Abstr. 99:177160) oder ein Styrolcopolymerisat, z.B. Styrol-Butadien- oder Styrol-Isopren-Kautschuk (vgl. Chem. Abstr. 92:7572 und Annual Convention of the Wire Association in Baltimore, U.S.A., reprint of paper, Nov. 1984, ETR No. 3A-1995).

Bei den oben beschriebenen bekannten Polyolefinkabelmaterialien mit Zusätzen von polymeren Wasserbäumchen-Inhibitoren sind die Effekte und die Beeinflussung des Wasserbäumchenwachstums sehr unterschiedlich, quantitative Aussagen fehlen in den meisten Fällen. In vielen Fällen wirken sich die Zusätze negativ auf die Homogenität des Polyolefin-Kabelmaterials und nachteilig auf die Alterungsbeständigkeit des Isoliermaterials aus.

Es ist auch bereits bekannt, gegen elektrische Beanspruchung stabilisiertes Isoliermaterial auf Basis von Polyolefinen und Copolymerisaten des Ethylen mit Vinylacetat zu verwenden, wobei das Polyolefin aus einem Ethylen-Alkylacrylat- oder Ethylen-Acrylsäure-Copolymerisat bestehen kann (vgl. US-A-4 092 488). Derartige Mischungen aus Ethylenpolymerisaten weisen den Nachteil auf, daß entweder eine ungenügende Resistenz gegenüber der Ausbildung und dem Wachstum von Wasserbäumchen erzielt wird oder die Menge der Ester- bzw. Säuregruppen so hoch gewählt werden muß, daß die dielektrischen Verluste der Massen unzulässig erhöht werden.

Aufgabe der vorliegenden Erfindung war es, die eingangs erwähnten Nachteile zu vermeiden und eine Kabelisolierung auf Basis von Ethylenpolymerisaten zu schaffen, die sowohl eine hohe Widerstandsfähigkeit gegenüber dem Entstehen oder dem Wachstum von Wasserbäumchen aufweisen als auch geringe dielektrische Verluste und eine hohe Alterungsbeständigkeit besitzen.

Diese Aufgabe wurde durch Kabelisolierungen gemäß Ansprüchen 1 bis 3 gelöst.

Isolierungen für elektrische Kabel und Leitungen aus Ethylenpolymerisaten sind wohlbekannt. Es ist wichtig, daß das Isoliermaterial verschiedene physikalische mechanische und elektrische Eigenschaften aufweist, um es für spezielle Anwendungen in der Kabelindustrie geeignet zu machen. Im vorliegenden Fall soll insbesondere die Widerstandsfähigkeit gegenüber der Bildung von Wasserbäumchen derart verbessert sein, daß bei Anwendung eines Ethylenpolymerisatmaterials mit technisch nicht vermeidbaren Gehalten an Verunreinigungen an wasserlöslichen Salzen unter Spannungsbelastung bei Wasser- oder Feuchtigkeitszutritt die Lebensdauer der Isolierung gegenüber nicht ausgerüstetem Material erhöht ist. Da die zulässige Leitertemperatur 90°C beträgt, soll gleichzeitig eine gute Alterungsbeständigkeit, d.h. eine langanhaltende Beständigkeit gegen thermische Oxidation und Abfall der mechanischen Eigenschaften gewährleistet sein.

Aus der DE-A-2 914 014 sind auch bereits Polymerzusammensetzungen aus linearen Ethylenpolymerisaten und anderen Ethylencopolymerisaten, wobei auch ein Terpolymerisat aus Ethylen, Methylarcrylat und Acrylsäure möglich ist, bekannt, die zur Herstellung von rückstellfähigen Formkörpern, elektrischen Isolierungen, Heizelementen und Membranen verwendet werden können. Es ist nicht zu erwarten, daß diese bekannten Polymermassen Kabelisolierungen mit hoher Widerstandsfähigkeit gegenüber dem Entstehen oder dem Wachstum von Wasserbäumchen bei gleichzeitig hoher Alterungsbeständigkeit liefern.

LD-Polyethylen (I) im Sinne der vorliegenden Erfindung ist in "Ullmanns Encyklopädie der technischen Chemie", 4. Auflage, Band 19, Verlag Chemie GmbH, D-6940 Weinheim, 1980, Seiten 169 bis 178 beschrieben. LD-Polyethylen kann vernetzt oder unvernetzt sein, bevorzugt ist es aber zu 50 bis 90 % entweder durch Peroxide oder energiereiche Strahlung vernetzt.

LD-Polyethylen (I) enthält 0,5 bis 20, bevorzugt 2 bis 10, insbesondere 4 bis 8 Gewichtsprozent eines von (I) unterschiedlichen Ethylenpolymerisats (II), wobei sich die Gewichtsprozentzahlen auf das Gewicht des Ethylenpolymerisats (I) beziehen. Das Ethylenpolymerisat (II) wird mit dem LD-Polyethylen (I) in üblichen Mischern nach herkömmlichen Methoden gemischt.

Die Mischung aus LD-Polyethylen (I) und Ethylenpolymerisat (II) enthält noch übliche Zusatzstoffe in üblichen Mengen. Unter üblichen Zusatzstoffen sind insbesondere Antioxidantien, Flammschutzmittel, Vernetzungshilfsmittel wie Triallylcyanurat und Vernetzungsmittel wie organische Peroxide zu verstehen von 0,5 bis 3,0 Gewichtsprozent, bezogen auf die Mischung.

Erfindungsgemäß soll das Ethylenpolymerisat (II) ein Terpolymerisat des Ethylens mit Schmelzindices - gemessen bei 190°C und 2,16 kp Belastung nach DIN 53 735 - von 1–30 g/min der Zusammensetzung a) 100 Mol-Teile einpolymerisiertes Ethylen, b) 1 bis 5,5 Mol-Teile einpolymerisierter $C_1$- bis $C_8$-Alkylester einer $C_3$- bis $C_6$-Alkencarbonsäure und 1 bis 3,2 Mol-Teile einpolymerisierte $C_3$- bis $C_6$-Alkencarbonsäure, bevorzugt ein Ethylen-Acrylsäurebutylester-Acrylsäure-Terpolymerisat sein. Derartige Terpolymerisate des Ethylens sind an sich bekannt und beispielsweise in den Literaturstellen EP-A1-106 999, EP-A1-157 106 oder EP-A1-157 107 beschrieben.

Die Ethylenterpolymerisate (II) weisen bevorzugt einen Schmelzindex - gemessen bei 190°C und 2,16 kp nach DIN 53 735 - von 2 bis 20 g/10 min und eine Dichte - gemessen nach DIN 53 479 - von 0,92 bis 0,95 g/cm³ auf. Besonders bevorzugt enthalten die Ethylenterpolymerisate (II) 95 bis 98 Mol.% Ethylen, 1,5 bis 2,5 Mol.% Acrylsäurebutylester und 1,3 bis 2,3 Mol.% Acrylsäure, wobei sich die Molprozente stets zu 100 addieren.

Der im Ethylenterpolymerisat (II) einpolymerisierte Acrylsäurebutylester ist bevorzugt ein n-Butyl- oder tert.-Butylester. Die Herstellung der Ethylenterpolymerisate (II) kann nach herkömmlichen üblichen Hochdruckpolymerisationsverfahren erfolgen (vgl. Ullmann's Encyklopädie der Technischen Chemie, 4. Auflage, Bd. 19, 1980, Seiten 169 bis 175, Verlag Chemie GmbH, D-6940 Weinheim sowie die US-Patente 3 520 861, 3 201 374 oder 3 350 372).

Die mit der Erfindung erzielbaren Vorteile sind insbesondere darin zu sehen, daß ein Kabelisoliermaterial auf Basis von Ethylenpolymerisaten zur Verfügung gestellt wird, das sowohl das Entstehen oder Wachsen von Wasserbäumchen inhibiert als auch geringe dielektrische Verluste und eine hohe Alterungsbeständigkeit aufweist.

Beispiel 1 (Vergleich)

LD-Polyethylen (LDPE) des Schmelzindex von 2 g/10 min und einer Dichte von 0,918 g/cm³ werden mit 0,3 Gew.% 4,4'-Thiobis-(6-tertiärbutyl-3-methyl-phenol) als Wärmestabilisator und 1,8 Gew.% Dicumylperoxid als Vernetzer ausgerüstet.

Aus dieser Zubereitung werden 1 mm dicke Preßplatten hergestellt bei einer Temperatur von 130°C, wobei das LD-Polyethylen nicht vernetzt wird.

Bei der Prüfung auf water-tree wird Kochsalz in Form kleiner Kristalle (Kantenlänge 10 μm) fein verteilt als Schicht in das LD-Polyethylen eingebracht. Dies geschieht, indem das Salz auf die unvernetzte Platte aufgestäubt, danach eine zweite ebensolche Platte aufgelegt und dieses Sandwich bei 200°C 10 min auf eine Dicke von 1 mm gepreßt wird. Dabei wird das Polyethylen vernetzt.

Die so hergestellten Proben werden eine Woche bei Raumtemperatur in Wasser gelagert. Danach werden sie bei 100 %iger Luftfeuchtigkeit mit einer Feldstärke von 2,5 kV/mm belastet.

Nach der elektrischen Belastung werden unter einem Lichtmikroskop die Anzahl, die Länge und die Struktur der entstandenen water trees in den einzelnen Proben festgestellt. Die Feststellung der Zahl der water trees geschieht im Strahlengang parallel zur Richtung des elektrischen Feldes, in dem die Belastung erfolgte.

Die Zahl der gebildeten water trees wird auf die Zahl der NaCl-Kristalle bezogen und als Menge in Gew.% in der Tabelle angegeben. Die Länge der water trees wird an ca. 0,5 mm dicken Schnitten durch die Probe ermittelt, wobei die Blickrichtung senkrecht zu der des elektrischen Feldes steht.

Die dielektrischen Verluste (tangδ) werden an 1 mm dicken Preßplatten bei 23°C und 80°C und einer Frequenz von 60 Hz bestimmt.

Beispiel 2 (Vergleich)

LD-Polyethylen wie in Beisiel 1 wird mit Ethylen-n-Butylacrylat-Copolymerisat, das 19 Gew.% n-Butylacrylat = nBA enthält, derart gemischt, daß die Mischung 2 Gew.% nBA enthält. Diese Mischung wird mit Wärmestabilisator und Vernetzer wie in Beispiel 1 ausgerüstet.

Geprüft wird wie in Beispiel 1. Ergebnis siehe Tabelle.

Beispiel 3 (Vergleich)

LD-Polyethylen wie in Beispiel 1 wird mit Ethylen-Acrylsäure-Copolymerisat, das 20 Gew.% freie Acrylsäure enthält, derart gemischt, daß die Mischung 2 Gew.% Acrylsäure enthält. Wärmestabilisator und Vernetzer wird wie in den Beispielen 1 und 2 zugesetzt.
Geprüft wird wie in Beispiel 1, Ergebnis siehe Tabelle.

Beispiel 4

LD-Polyethylen wie in Beispiel 1 wird mit einem Terpolymerisat bestehend aus 88 Gew.% Ethylen 8 Gew.% n-Butylacrylat und 4 Gew.% Acrylsäure (AA) derart gemischt, daß die Mischung 1,3 Gew.% nBA und 0,7 Gew.% AA enthält. Wärmestabilisator und Vernetzer wird wie in den Beispielen 1 bis 3 zugesetzt.
Geprüft wird wie in Beispiel 1, Ergebnis siehe Tabelle.

Beispiel 5 (Vergleich)

LD-Polyethylen wie in Beispiel 1 wird mit einem Copolymerisat aus 81 Gew.% Ethylen und 19 Gew.% n-Butylacrylat derart gemischt, daß die Mischung 10 Gew.% nBA enthält. Wärmestabilisator und Vernetzer wird wie in den Beispielen 1 bis 4 zugesetzt.
Geprüft wird wie in Beispiel 1, Ergebnis siehe Tabelle.

### Tabelle

| Beispiel | Mischung | Gew.% | | Water tree | | | | Dielektrische |
| | LDPE | nBA | AA | 7 Tage | | 80 Tage | | Verluste |
| | | | | Menge % | Länge µm | Menge % | Länge µm | tan δ bei 60 Hz, 23°C |
|---|---|---|---|---|---|---|---|---|
| 1 | 100 | – | – | 95 | 400 | 95 | 1000 | $1 \times 10^{-4}$ |
| 2 | 98 | 2 | – | 50 | 400 | 95 | 500 | $3 \times 10^{-4}$ |
| 3 | 98 | – | 2 | 95 | 400 | 95 | 900 | $5 \times 10^{-4}$ |
| 4 | 98 | 1,3 | 0,7 | 1 | 400 | 10 | 500 | $3 \times 10^{-4}$ |
| 5 | 90 | 10 | – | 0 | – | 1 | 400 | $1 \times 10^{-3}$ |

LDPE = Low Density Polyethylen = LD Polyethylen

nBA = n-Butylacrylat

AA = Acrylic Acid

Der Tabelle ist zu entnehmen, daß die Kombination aus n-Butylester und freier Acrylsäure einen synergistischen Effekt bezüglich der Schutzwirkung gegen die Bildung von water trees zeigt.

## Patentansprüche

1. Kabelisolierung mit hoher Widerstandsfähigkeit gegenüber dem Entstehen oder dem Wachstum von Wasserbäumchen (water trees) und mit hoher Alterungsbeständigkeit, bestehend aus einem LD-Polyethylen (I) und 0,5 bis 20 Gew.-%, bezogen auf das LD-Polyethylen (I), eines von (I) unterschiedlichen Ethylenpolymerisats (II) und üblichen Zusatzstoffen in üblichen Mengen, dadurch gekennzeichnet, daß das Ethylenpolymerisat (II) ein Terpolymerisat des Ethylens mit Schmelzindices, gemessen bei 190° C und 2,16 kp Belastung nach DIN 53 735, von 1,0 bis 30 g/10 min der Zusammensetzung:
   a) 100 Mol-Teile einpolymerisiertes Ethylen
   b) 1 bis 5,5 Mol-Teile einpolymerisierter $C_1$–bis $C_8$-Alkylester
   einer $C_3$- bis $C_6$-Alkencarbonsäure und
   c) 1 bis 3,2 Mol-Teile einpolymerisierte $C_3$- bis $C_6$-Alkencarbonsäure ist.
2. Kabelisolierung nach Anspruch 1, dadurch gekennzeichnet, daß das Ethylenpolymerisat (II) ein Ethylen-Acrylsäurebutylester-Acrylsäure-Terpolymerisat ist.
3. Kabelisolierung nach Anspruch 1, dadurch gekennzeichnet, daß das Ethylenpolymerisat (II) eine Dichte – gemessen nach DIN 53 479 – von 0,92 bis 0,95 $g/cm^3$ aufweist.

## Claims

1. A cable insulation having high resistance to the formation or growth of water trees and high aging resistance and consisting of a low polyethylene (I) and from 0.5 to 20% by weight, based on the low density polyethylene (I), of an ethylene polymer (II) which differs from (I) and conventional additives in the usual amounts, wherein the ethylene polymer (II) is an ethylene terpolymer having a melt flow index of from 1.0 to 30 g/10 min, measured at 190° C and under a load of 2.16 kp according to DIN 53,735, and consisting of

   a) 100 mole parts of copolymerized ethylene

   b) from 1 to 5.5 mole parts of a copolymerized $C_1$-$C_8$-alkyl ester of a $C_3$-$C_6$-alkenecarboxylic acid and

   c) from 1 to 3.2 mole parts of a copolymerized $C_3$-$C_6$-alkenecarboxylic acid.

2. The cable insulation as claimed in claim 1, wherein the ethylene polymer (II) is an ethylene/butyl acrylate/acrylic acid terpolymer.

3. The cable insulation as claimed in claim 1, wherein the ethylene polymer (II) has a density of from 0.92 to 0.95 g/cm³, measured according to DIN 53,479.

## Revendications

1. Isolation de câble possédant une résistance élevée à la formation ou au développement d'"arbres d'eau" (water trees) et une bonne tenue au vieillissement, se composant d'un polyéthylène basse densité (I) et de 0,5 à 20% en poids, par rapport au polyéthylène basse densité (I), d'un polymère d'éthylène (II) différent de (I), ainsi que d'additifs usuels dans les proportions habituelles, caractérisée en ce que le polymère d'éthylène (II) est un terpolymère de l'éthylène ayant un indice de fusion, mesuré à 190° C et sous une charge de 2,16 kp selon la DIN 53 735, de 1,0 à 30 g/10 mn, et ayant la composition suivante:

   a) 100 parties en moles d'éthylène en liaison polymère,

   b) 1 à 5,5 parties en moles d'ester $C_1$-$C_a$-alkylique d'un acide $C_3$-$C_6$-alcenecarboxylique en liaison polymère et

   c) 1 à 3,2 parties en moles d'acide $C_3$-$C_6$-alcènecarboxylique en liaison polymère.

2. Isolation de câble selon la revendication 1, caractérisée en ce que le polymère d'éthylène (II) est un terpolymère éthylène/ester butylique d'acide acrylique/acide acrylique.

3. Isolation de câble selon la revendication 1, caractérisé en ce que le polymère d'étyhlène (II) présente une masse volumique – mesurée suivant la DIN 53 479 – de 0,92 à 0,95 g/cm³.